# EUROPEAN PATENT APPLICATION

(11) **EP 4 821 804 A1**
(43) Date of publication of application: **14.10.2026**
(21) Application number: 24899329.7
(22) Date of filing: 15.08.2024
(51) Int. Cl.: B62M 9/16

(54) **TWO-WHEELED VEHICLE TRANSMISSION SYSTEM AND TWO-WHEELED VEHICLE**

(30) Priority: 08.12.2023 CN 202323335942 U
(71) Applicant: Suzhou SKS Industrial Parts Co., Ltd., Suzhou, Jiangsu 215000 (CN)
(72) Inventor: XU, Zhou, Suzhou, Jiangsu 215000 (CN)
(74) Representative: Miller, Ronald Anthony
(86) International application number: PCT/CN2024/112228
(87) International publication number: WO 2025/118681

(57) **Abstract**

The present invention relates to a two-wheeled vehicle transmission system and a two-wheeled vehicle. The two-wheeled vehicle transmission system includes a transmission belt and at least two pulleys. A plurality of belt teeth are arranged at intervals on the inner surface of the transmission belt in the axial direction; the belt teeth are of a V-shaped structure, and the belt teeth on two sides are symmetrically distributed with respect to the axis of the transmission belt; and a meshing slot of a V-shaped structure is formed between every two adjacent belt teeth. Each pulley includes a pulley hub and a plurality of pulley teeth which are distributed at intervals in the circumferential direction of an outer ring of the pulley hub and match and mesh with the meshing slots. By designing the belt teeth and the pulley teeth into V-shaped symmetrical structures that match each other, lateral constraining forces can be generated during meshing of the belt teeth with the pulley teeth, and the constraining forces on two sides can symmetrically counterbalance each other, so that the belt teeth and the pulley teeth can be automatically centered, thereby avoiding axial movement of the transmission belt, ensuring that the transmission belt does not slip off the pulleys, and achieving stable and smooth operation. Eliminating the retaining ring design of a conventional transmission system achieves a simple and lightweight structure and a clean and aesthetically pleasing appearance.

## Description

### TECHNICAL FIELD

The present invention relates to the technical field of belt drive, and specifically relates to a two-wheeled vehicle transmission system and a two-wheeled vehicle.

### BACKGROUND

Conventional two-wheeled vehicles, including bicycles, electric power-assisted bicycles, electric motorcycles, or fuel motorcycles, mostly utilize a combination of a chain and a sprocket for power transmission. However, chain-and-sprocket transmission systems suffer from problems such as susceptibility to wear, shortened service life, a requirement for periodic lubrication, and high noise during use. Therefore, modern two-wheeled vehicle transmissions increasingly adopt a transmission mode where a belt cooperates with pulleys, which provides advantages of low noise, long service life, light weight, and maintenance-free operation.

Although replacing conventional chain transmissions with belt transmissions offers numerous advantages, limitations still exist. Ordinary belt transmissions require retaining rings designed on both sides of the pulley to prevent the belt from falling off the pulley. This results in an overall transmission system design that is complex and bulky, thereby affecting the overall appearance. At the same time, the belt tends to move back and forth (i.e., axial play or movement) during operation, which affects riding comfort.

### SUMMARY

An objective of the present invention is to provide a two-wheeled vehicle transmission system and a two-wheeled vehicle, which enable automatic centering between belt teeth and pulley teeth during operation of the transmission system, prevent axial movement of the transmission belt, ensure that the transmission belt does not slip off the pulleys, and achieve stable and smooth operation. The structure is simple and lightweight, and the appearance is clean and aesthetically pleasing.

To achieve the above objective, according to a first aspect of the present invention, there is provided a two-wheeled vehicle transmission system, including:
a transmission belt, where a plurality of belt teeth are arranged at intervals on an inner surface of the transmission belt along an axial direction, the belt teeth are of a V-shaped structure, two sides of each of the belt teeth are symmetrically distributed with respect to an axis of the transmission belt, and a meshing slot of a V-shaped structure is formed between every two adjacent belt teeth;
at least two pulleys, each of the pulleys including a pulley hub and a plurality of pulley teeth distributed at intervals along a circumferential direction of an outer ring of the pulley hub and matching and meshing with the meshing slots.

Optionally, the belt teeth include first belt teeth and second belt teeth, and the first belt teeth and the second belt teeth are symmetrically distributed with respect to the axis of the transmission belt.

Optionally, an axis of each of the first belt teeth and an axis of each of the second belt teeth form an angle of 18°-23° with the axis of the transmission belt.

Optionally, two sides of each of the meshing slots are symmetrically distributed with respect to the axis of the transmission belt, and a depth of each of the meshing slots gradually deepens from a middle position toward the two sides.

Optionally, each of the meshing slots has a plurality of meshing planes along the axial direction of the transmission belt, and an angle is formed between every two adjacent meshing planes to form a meshing edge.

Optionally, two sides of each of the pulley teeth are symmetrically distributed with respect to an axis of the outer ring of the pulley hub.

Optionally, a width of the pulley teeth is equal to a width of the belt teeth.

Optionally, a surface of each of the belt teeth is an outwardly protruding arcuate structure.

Optionally, a gap is provided between each of the first belt teeth and a corresponding one of the second belt teeth.

According to a second aspect of the present invention, there is provided a two-wheeled vehicle, including:
a vehicle body;
a two-wheeled vehicle transmission system disposed on the vehicle body.

The beneficial effects of the present invention are as follows: by designing the belt teeth and the pulley teeth into V-shaped symmetrical structures that match each other, lateral constraining forces can be generated during the meshing process of the belt teeth and the pulley teeth, and the constraining forces on both sides can symmetrically counterbalance and balance each other, so that the belt teeth and the pulley teeth can be automatically centered during operation of the transmission system. Through the above design, axial movement of the transmission belt can be prevented, ensuring that the transmission belt does not slip off the pulleys, and achieving stable and smooth operation. By eliminating the retaining ring design of conventional transmission systems, the present technical solution offers a simple and lightweight structure, as well as a clean and aesthetically pleasing appearance compared to the bulky and complex designs of conventional transmission systems.

The above explanation is merely an overview of the technical solution of the present invention. In order to clearly understand the technical means of the present invention so that it can be implemented in accordance with the content of the description, preferred embodiments of the present invention are described in detail below in conjunction with the accompanying drawings.

### BRIEF DESCRIPTION OF THE DRAWINGS

FIG. 1 is a schematic structural view showing a two-wheeled vehicle transmission system according to an embodiment of the present invention;
FIG. 2 is a first schematic structural view showing a transmission belt of the two-wheeled vehicle transmission system according to an embodiment of the present invention;
FIG. 3 is a second schematic structural view showing the transmission belt of the two-wheeled vehicle transmission system according to an embodiment of the present invention;
FIG. 4 is a first schematic structural view showing a pulley of the two-wheeled vehicle transmission system according to an embodiment of the present invention;
FIG. 5 is a second schematic structural view showing the pulley of the two-wheeled vehicle transmission system according to an embodiment of the present invention;
FIG. 6 is a partial schematic structural view showing a two-wheeled vehicle according to an embodiment of the present invention.

Reference signs
Please refer to the following figures for detailed explanation: 1: transmission belt; 11: belt teeth; 111: first belt teeth; 112: second belt teeth; 12: meshing slot; 121: meshing plane; 122: meshing bottom surface; 123: meshing side surface; 124: meshing edge; 2: pulley; 21: pulley hub; 22: pulley teeth; 10: two-wheeled vehicle transmission system; 20: vehicle body.

### DETAILED DESCRIPTION OF THE EMBODIMENTS

The technical solutions in the embodiments of the present invention will be clearly and completely described below in conjunction with the accompanying drawings. Obviously, the described embodiments are merely a part of the embodiments of the present invention, rather than all of the embodiments. Based on the embodiments in the present invention, all other embodiments obtained by those of ordinary skill in the art without making creative efforts shall fall within the scope of protection of the present invention.

In the description of the present invention, it should be noted that orientation or positional relationships indicated by terms such as "center", "upper", "lower", "left", "right", "vertical", "horizontal", "inner", "outer", etc. are orientation or positional relationships based on the drawings. These terms are merely for convenience of description and simplifying the description, and do not indicate or imply that the referred device or element must have a specific orientation, or be constructed and operated in a specific orientation, and therefore cannot be construed as a limitation on the present invention. In addition, the terms "first", "second", and "third" are used for descriptive purposes only and cannot be construed as indicating or implying relative importance.

In the description of the present invention, it should be noted that unless otherwise clearly specified and defined, terms such as "installation", "interconnection", and "connection" should be understood in a broad sense. For example, it may be a fixed connection, a detachable connection, or an integral connection; it may be a mechanical connection or an electrical connection; it may be directly connected, or indirectly connected through an intermediate medium, or it may be internal communication between two elements. For those of ordinary skill in the art, the specific meanings of the above terms in the present invention can be understood according to specific circumstances. Furthermore, the technical features involved in different embodiments of the present invention described below can be combined with each other as long as they do not conflict with each other.

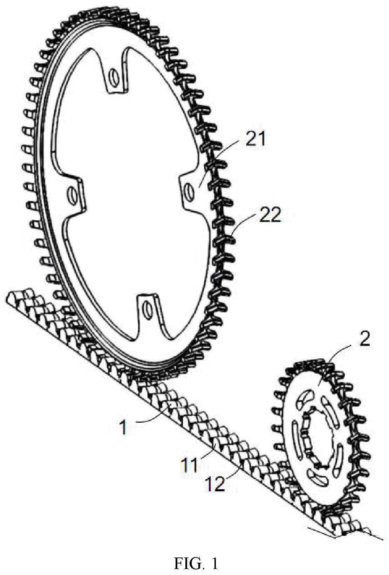

Please refer to FIG. 1, which shows a two-wheeled vehicle transmission system 10 according to a preferred embodiment of the present application. The two-wheeled vehicle transmission system 10 includes a transmission belt 1 and at least two pulleys 2. A plurality of belt teeth 11 are arranged at intervals on an inner surface of the transmission belt 1 along an axial direction. The belt teeth 11 are of a V-shaped structure, and two sides of each of the belt teeth 11 are symmetrically distributed with respect to an axis of the transmission belt 1. A meshing slot 12 of a V-shaped structure is formed between every two adjacent belt teeth 11. Each of the pulleys 2 includes a pulley hub 21 and a plurality of pulley teeth 22 distributed at intervals along a circumferential direction of an outer ring of the pulley hub 21 and matching and meshing with the meshing slots 12.

According to the technical solution of the embodiment of the present invention, by designing the belt teeth 11 and the pulley teeth 22 into V-shaped symmetrical structures that match each other, lateral constraining forces can be generated during the meshing process of the belt teeth 11 and the pulley teeth 22 to enhance the stability of their meshing, and the constraining forces on both sides can symmetrically counterbalance and balance each other, so that the belt teeth 11 and the pulley teeth 22 can be automatically centered when the transmission system is stationary or in operation. Through the above design, axial movement of the transmission belt can be prevented, ensuring that the transmission belt 1 does not slip off the pulleys 2, and achieving stable and smooth operation. The present solution eliminates the retaining rings used in conventional transmission systems. Compared to the bulky and complex designs of conventional transmission systems, the technical solution of the present application provides a simple and lightweight structure, as well as a clean and aesthetically pleasing appearance.

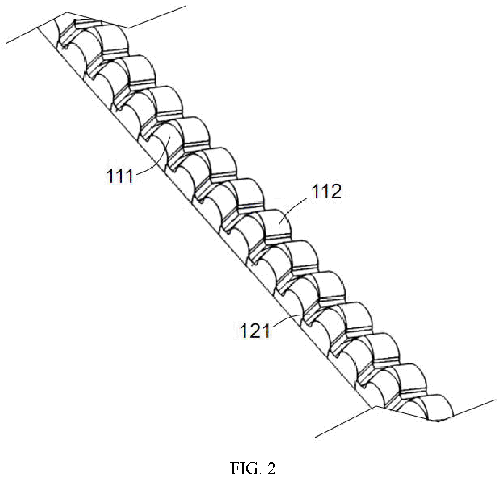

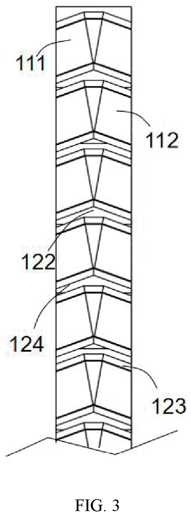

The technical solution is described in detail below with reference to specific embodiments:
Please refer to FIG. 2 and FIG. 3. The belt teeth 11 include first belt teeth 111 and second belt teeth 112, and the first belt teeth 111 and the second belt teeth 112 are symmetrically distributed with respect to the axis of the transmission belt 1. An axis of each of the first belt teeth 111 and an axis of each of the second belt teeth 112 form an angle of 18° - 23° with the axis of the transmission belt 1.

Specifically, in the present embodiment, the axis of each of the first belt teeth 111 and the axis of each of the second belt teeth 112 form an angle of 20° with the axis of the transmission belt 1.

In conventional transmission systems, the belt teeth 11 and the pulley teeth 22 both have straight structures, i.e., the tooth profile axis is a straight line. This leads to a lack of constraint in the width direction of the transmission belt 1 when the belt teeth 11 mesh with the pulley teeth 22. Consequently, the transmission belt 1 easily disengages from the pulley 2 during operation of the transmission system. Therefore, conventional transmission systems are provided with retaining rings for blocking. However, the retaining ring design is bulky and visually unappealing, and a clearance exists between the retaining ring and the transmission belt 1. Therefore, during the operation of the transmission system, the pulley 2 still moves sideways back and forth by small increments along the width direction of the transmission belt 1, thereby affecting riding comfort. In contrast, in the present embodiment, the first belt teeth 111 and the second belt teeth 112 are arranged to be symmetrically distributed at an angle of 20° relative to the axis of the transmission belt 1. Therefore, the meshing slots 12 formed between every two adjacent belt teeth 11 and the pulley teeth 22 matching and meshing therewith share the same design. Through the above design, when the belt teeth 11 mesh with the pulley teeth 22, the pulley teeth 22 can be confined and snapped into the meshing slots 12 to achieve an automatic centering function, thereby solving the problem of axial movement of the transmission belt 1 and preventing the transmission belt 1 from falling off the pulleys 2.

A gap is provided between each of the first belt teeth 111 and a corresponding one of the second belt teeth 112. In the present embodiment, the first belt teeth 111 and the second belt teeth 112 are arranged to open obliquely at a certain angle relative to the axis of the transmission belt 1, and the gap formed therebetween has a triangular structure. On one hand, the design of this gap allows the first belt teeth 111 and the second belt teeth 112 to be arranged separately, which prevents the concentration of bending stress at the middle position of the belt teeth 11. Otherwise, the teeth would easily crack and deform after long-term use, affecting the meshing process and causing the transmission belt 1 to fall off. On the other hand, the gap facilitates the discharge of debris, preventing debris from accumulating in the meshing slots 12 over a long period, which would otherwise cause the depth of the meshing slots 12 to become shallow and affect transmission.

The surface of each of the belt teeth 11 is an outwardly protruding arcuate structure. The belt teeth 11 having the arcuate structure can guide the pulley teeth 22 during operation of the transmission system, making the process of snapping the pulley teeth into the meshing slots 12 for transmission smoother, thereby increasing riding comfort.

Two sides of each of the meshing slots 12 are symmetrically distributed with respect to the axis of the transmission belt 1, and the depth of each of the meshing slots 12 gradually deepens from a middle position toward the two sides. The meshing slot 12 is defined by the space formed between two adjacent belt teeth 11, and its cross-section itself is a V-shaped structure. The design where the depth on both sides of the meshing slot 12 gradually deepens can better confine and catch the corresponding two sides of the pulley teeth 22, allowing them to automatically center and providing better meshing stability.

Each of the meshing slots 12 has a plurality of meshing planes 121 along the axial direction of the transmission belt 1, and an angle is formed between every two adjacent meshing planes 121 to form a meshing edge 124. In the present embodiment, the meshing slot 12 has three meshing planes 121, including a meshing bottom surface 122 located at the bottom of the meshing slot 12 and meshing side surfaces 123 located on both sides of the meshing slot 12. An obtuse angle is formed between each of the meshing side surfaces 123 and the meshing bottom surface 122. Correspondingly, the pulley teeth 22 cooperating with the meshing slots 12 share the same design. The design of multiple meshing planes 121 within the meshing slot 12 can increase the contact area between the meshing slot 12 and the pulley tooth 22. The meshing edge 124 formed by the angle between two adjacent meshing planes 121 can increase the friction force between the meshing slot 12 and the pulley tooth 22, so as to improve the stability of the meshing process.

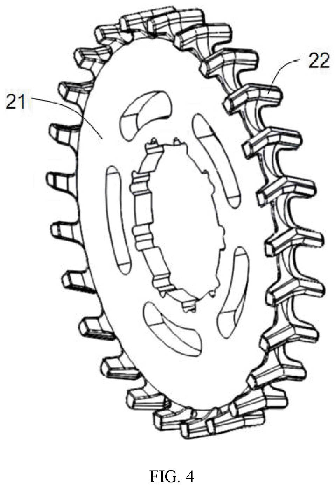

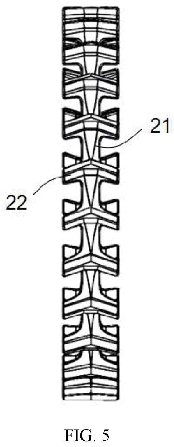

Please refer to FIG. 4 and FIG. 5. Two sides of each of the pulley teeth 22 are symmetrically distributed with respect to the axis of the outer ring of the pulley hub 21, and the width of the pulley teeth 22 is equal to the width of the belt teeth 11. Since the pulley teeth 22 match and mesh with the belt teeth 11 and the meshing slots 12, they are also configured as a V-shaped structure symmetrically distributed with respect to the axis of the outer ring of the pulley hub 21, and the pulley teeth 22 extend obliquely outward from the middle position toward both sides to adapt to the varying depths of the meshing slots 12. At the same time, the pulley teeth 22 also have meshing mating surfaces corresponding to the meshing planes 121 in the meshing slots 12. The width of the pulley teeth 22 is equal to the width of the belt teeth 11, which on one hand can maximize the compatibility of the meshing transmission between the pulley teeth 22 and the belt teeth 11, and on the other hand can prevent waste of materials.

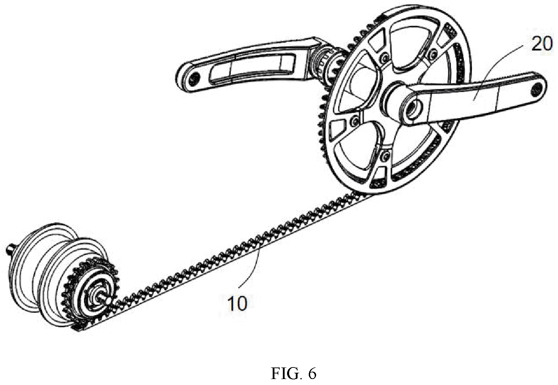

Please refer to FIG. 6. An embodiment of the present invention further provides a two-wheeled vehicle, which includes a vehicle body 20 and a two-wheeled vehicle transmission system 10. The two-wheeled vehicle transmission system 10 is disposed on the vehicle body 20.

The technical features of the above-described embodiments can be combined arbitrarily. In order to make the description concise, all possible combinations of the technical features in the above embodiments are not described. However, as long as there is no contradiction in the combination of these technical features, they should be considered within the scope of this description.

The above-described embodiments merely express several embodiments of the present invention, and the descriptions thereof are relatively specific and detailed, but they cannot therefore be construed as limiting the scope of the present invention. It should be pointed out that for those of ordinary skill in the art, several modifications and improvements can be made without departing from the concept of the present invention, and these shall all fall within the scope of protection of the present invention. Therefore, the scope of protection of the patent of the present invention shall be subject to the appended claims.

## Claims

1. A two-wheeled vehicle transmission system, **characterized by** comprising:
a transmission belt, wherein a plurality of belt teeth are arranged at intervals on an inner surface of the transmission belt along an axial direction, the belt teeth are of a V-shaped structure, two sides of each of the belt teeth are symmetrically distributed with respect to an axis of the transmission belt, and a meshing slot of a V-shaped structure is formed between every two adjacent belt teeth;
at least two pulleys, wherein each of the pulleys comprises a pulley hub and a plurality of pulley teeth distributed at intervals along a circumferential direction of an outer ring of the pulley hub and matching and meshing with the meshing slots.

2. The two-wheeled vehicle transmission system according to claim 1, **characterized in that** the belt teeth comprise first belt teeth and second belt teeth, and the first belt teeth and the second belt teeth are symmetrically distributed with respect to the axis of the transmission belt.

3. The two-wheeled vehicle transmission system according to claim 2, **characterized in that** an axis of each of the first belt teeth and an axis of each of the second belt teeth form an angle of 18° - 23° with the axis of the transmission belt.

4. The two-wheeled vehicle transmission system according to claim 1, **characterized in that** two sides of each of the meshing slots are symmetrically distributed with respect to the axis of the transmission belt, and a depth of each of the meshing slots gradually deepens from a middle position toward the two sides.

5. The two-wheeled vehicle transmission system according to claim 4, **characterized in that** each of the meshing slots has a plurality of meshing planes along the axial direction of the transmission belt, and an angle is formed between every two adjacent meshing planes to form a meshing edge.

6. The two-wheeled vehicle transmission system according to claim 1, **characterized in that** two sides of each of the pulley teeth are symmetrically distributed with respect to an axis of the outer ring of the pulley hub.

7. The two-wheeled vehicle transmission system according to claim 6, **characterized in that** a width of the pulley teeth is equal to a width of the belt teeth.

8. The two-wheeled vehicle transmission system according to claim 1, **characterized in that** a surface of each of the belt teeth is an outwardly protruding arcuate structure.

9. The two-wheeled vehicle transmission system according to claim 3, **characterized in that** a gap is provided between each of the first belt teeth and a corresponding one of the second belt teeth.

10. A two-wheeled vehicle, **characterized by** comprising:
a vehicle body ;
the two-wheeled vehicle transmission system according to any one of claims 1 to 9, disposed on the vehicle body.
